# EUROPÄISCHE PATENTSCHRIFT

(11) **EP 0 627 341 B1**
(45) Veröffentlichungstag und Bekanntmachung des Hinweises auf die Patenterteilung: **12.11.1997**
(21) Anmeldenummer: 94108458.4
(22) Anmeldetag: 01.06.1994
(51) Int. Cl.: B60R 13/06, B60J 10/08

(54) **Kunststoffprofil**
Plastics profile
Profile en résine synthétique

(30) Priorität: 04.06.1993 DE 4318685
(43) Veröffentlichungstag der Anmeldung: 07.12.1994
(73) Patentinhaber: Trier, Lothar, D-96247 Michelau (DE)
(72) Erfinder: Trier, Lothar, D-96247 Michelau (DE)
(74) Vertreter: Prechtel, Jörg, Dipl.-Phys. Dr.

(56) Entgegenhaltungen:
- EP-A- 0 021 989
- EP-A- 0 200 618
- EP-A- 0 333 536
- EP-A- 0 349 389
- DE-A- 4 035 658
- GB-A- 2 109 042

## Beschreibung

Die vorliegende Erfindung bezieht sich auf ein Kunststoffprofil, welches an einem Trägerteil, insbesondere einer Automobiltüre oder einer Automobilkarosserie anbringbar ist zur Anlage am Trägerteil, insbesondere an einem lackierten Fahrzeugteil und/oder an einem weiteren Teil, welches relativ zum Trägerteil starr oder bewegbar ist, insbesondere einer Glasscheibe, umfassend ein langgestrecktes Profilteil aus elastomerem Material sowie eine an dem Profilteil vorgesehene und an dem jeweiligen Teil anliegende Gleitauflage.

Derartige Kunststoffprofile sind bereits aus der GB-A-2 109 042 bekannt. Sie dienen z.B. zur Abdichtung gegen das Eindringen von Wasser oder Schmutz und Staub in den zur Aufnahme der Fensterscheibe vorgesehenen unteren Abschnitt der Automobiltüre und zum Fuhren der Scheibe beim Öffnen oder Schließen, ohne dabei einen erheblichen Reibungswiderstand zu erzeugen.

Diese bekannten Kunststoffprofile bestehen aus langgestreckten Profilteilen, welche am Fensterrahmen der Automobiltüre so angeordnet sind, daß sie an jeder Seite der bewegbaren Fensterscheibe anliegen. An ihrem zur Anlge an der Fensterscheibe bestimmten Oberflächenabschnitt weisen die Profilteile eine Gleitauflage auf. Diese Gleitauflege dient dazu, unter Beibehaltung der Dichtungseigenschaften der Profilteile ein leichtgängiges Gleiten der Fensterscheibe an dem Profilteil sicherzustellen.

Die bei diesen bekannten Kunststoffprofilen verwendeten Gleitauflagen bestehen beispielsweise aus Streifen aus Polymermatrial mit geringem Reibungskoeffizienten oder werden durch Sprühbeschichtung aufgebracht.

Ferner sind aus der EP-A-0 200 618 Profilteile bekannt, die in einem Extrusionsverfahren aus elastomerem EPDM-Kautschuk hergestellt werden. Diese EPDM-Profilteile werden in einem der Extrusion nachgeschalteten Arbeitsgang vernetzt. Auf die Vernetzung folgend wird auf die zur Anlage an der Fensterscheibe vorgesehene Oberfläche der Profilteile eine Gleitauflage in Form einer Beflockung aufgebracht. Diese Beflockung besteht aus Faserflocken, welche mittels eines speziellen Klebstoffs mit der vernetzten Oberfläche der Profilteile verklebt werden.

Aus der EP-A-0 333 536 ist ein Dichtprofil zur Verwendung bei Kraftfahrzeugen bekannt, das zwei Dichtungsarme aufweist, die am jeweiligen Bauteil, z. B. einer Fensterscheibe, anliegen und eine Dichtwirkung erzielen. Das Dichtprofil besteht aus elastomerem Material, wie z. B. Kautschuk, oder einem plastomeren Material, wie z. B. PVC. An den Dichtarmen sind Gleitschichten vorgesehen, die beispielsweise durch Koextrusion mit dem Profilteil selbst hergestellt werden.

Die DE-A-40 35 658 offenbart ein Dichtungsprofil, dessen Grundkörper aus einem Elastomer, wie z. B. Natur- oder Synthesekautschuk, besteht. Darauf ist eine aus geschäumtem Kunststoff, z. B. Polyacrylatschaum, bestehende Trägerschicht aufgebracht. Auf der Trägerschicht ist vermittels einer Klebeschicht eine die Gleitfläche bildende Folie aufgebracht, die beispielsweise aus Polytetrafluorethylen besteht.

Die EP-A-0 349 389 offenbart ein Dichtungsprofil, bei dem das Profil selbst wiederum aus elastomerem Material, plastomerem Material oder einem thermoplastischen Elastomer besteht. Auf einen Dichtungsarm ist eine Gleitschicht durch Beflockung aufgebracht. Ein weiterer Dichtungsarm weist eine Gleitschicht mit gutem Reibungskoeffizienten auf, die beispielsweise aus Polyolefin oder Polytetrafluorethylen besteht.

Die EP-A-0 021 989 offenbart ein Dichtprofil, bei dem am Profilteilkörper als Gleit- und Dichtauflage eine Mehrzahl von sich in Längsrichtung des Profilteils erstreckenden Rippenelementen vorgesehen ist.

Derartige bekannte Kunststoffprofile haben den Nachteil, daß zu ihrer Herstellung eine Mehrzahl von aufeinanderfolgenden Arbeitsschritten, wie z.B. Extrusion, Vernetzen, Aufrauhen der Oberfläche und Beflocken, nötig ist. Dies führt zu erheblichen Herstellungskosten der Profile. Ferner erlaubt die Auswahl und Zusammensetzung der einzelnen Kunststoffmaterialien für die Beflockung, den Klebstoff und die Profilteile keine Wiederaufbereitung der Dichtungs- oder Führungsprofile nach Beendigung des Gebrauchs. Die Wiederverwertung (Recycling) der Profile ist daher unter wirtschaftlichen Gesichtspunkten nicht durchführbar, da diese eine Sortentrennung der beteiligten Kunststoffe erfordert.

Bei Feuchtigkeit bindet die Beflockung einen gewissen Anteil an Wasser am Profilteil. Dies kann bei niedrigen Außentemperaturen dazu führen, daß das am Profil gebundene Wasser an der Fensterscheibe anfriert und ein Bewegen der Fenstescheibe erschwert bzw. nicht mehr möglich ist, und der Mechanismus zur Betätigung der Fensterscheibe möglicherweise beschädigt wird.

Ferner besteht im Automobilbau das Problem, daß an einer Fahrzeugkarosserie eine Vielzahl von Teilen angebracht ist, welche direkt an der lackierten Fahrzeugkarosserie, oder z.B. auch an der Fahrzeugtür, anliegen. Beim Betrieb der Fahrzeuge werden jedoch die Vibrationen des Motors auch auf die Karosserie und die Fahrzeugtüren übertragen, so daß auch die an der Karosserie oder der Tür angebrachten Teile, z.B. Zierleisten oder Abdeckblenden, zum Schwingen angeregt werden. Da diese Teile durch die direkte Anlage an der Karosserie aufgrund eines Adhäsioneffekts leicht anhaften können, entsteht aufgrund des unterschiedlichen Schwingungsverhaltens der Teile und der entsprechenden Karosserieteile eine durch die Adhäsionskraft gedämpfte, oszillierende Verschiebung der Teile zueinander. Dabei können Quietschgeräusche erzeugt werden, welche auch im Inneren der Karosserie deutlich hörbar sind, und daher den Fahrkomfort erheblich beeinträchtigen.

Dieses Problem besteht z.B. auch bei fest in die Karosserie eingebauten Fensterscheiben und bei an der Karosserie bewegbar angebrachten, jedoch an dieser anliegenden Fahrzeugteilen, wie z.B. den Fahrzeugtüren und dem Kofferraumdeckel. Bei diesen Bauteilen werden zum Abdichten Gummiprofilelemente verwendet, welche z.B. an der Fensterscheibe, den Türen oder dem Kofferraumdeckel anliegen, und welche aufgrund ihrer Oberflächenadhäsionseigenschaft wiederum an den entsprechenden Bauteilen des Fahrzeugs leicht anhaften und somit zur Erzeugung von Quietschgeräuschen führen können.

Demgegenüber ist es die Aufgabe der Erfindung, ein Kunststoffprofil vorzusehen, welches kostengünstig herzustellen ist und unabhängig von äußeren Bedingungen immer eine leichtgängige, geräuscharme Relativbewegung zwischen dem Kunststoffprofil und dem bzw. den am Kunststoffprofil anliegenden Teil/Teilen ermöglicht.

Diese Aufgabe wird dadurch gelöst, daß die Gleitauflage ein in Längsrichtung des Profilteils verlaufendes Vlies ist. Bei den erfindungsgemäßen Profilteil ist ein stoffbündiges Verbinden des Profilteils mit der Gleitauflage ohne zusätzliche Klebstoffe möglich. Insbesondere bei quer zur Bewegungsrichtung des bewegten Teils verlaufenden Dichtungs- oder Führungsprofilen können sich kleinste Staub- und Sandkörner im Vlies ansammeln, ohne zu einem Verkratzen der zu Anlage bestimmten Oberfläche, z.B. der bewegten Fensterscheibe, zu führen, im Gegensatz zu den bekannten Profilen mit Beflockung als Gleitauflage. Vibrationsbedingte Quietschgeräusche werden unterbunden.

Wird das erfindungsgemäße Kunststoffprofil zwischen zwei Teilen angeordnet, welche am Kraftfahrzeug bzw. an der Kraftfahrzeugkarosserie anliegend angeordnet sind, so können diese Teile aufgrund der Gleiteigenschaften des Kunststoffprofils voneinander entkoppelt jeweils die durch die Vibrationen des Motors hervorgerufenen Oszillationsbewegungen durchführen, ohne dabei Quietschgeräusche zu erzeugen, welche ansonsten durch die Adhäsionseigenschaften der Teile aneinander hervorgerufen würden.

Ein problemloses "Recycling" der Kunststoffprofile wird dadurch ermöglicht, daß das Vlies aus einem Thermoplast besteht, und daß das Profil aus einem Thermoplast mit elastomeren Eigenschaften besteht.

Besonders kostengünstig und einfach ist das Kunststoffprofil dadurch herzustellen, daß das Vlies unmittelbar beim Extrusionsvorgang auf das Profilteil aufgebracht wird. Somit kann das flüssige oder zähflüssige Profilteil eine stoffbündige Verbindung mit dem zum Beispiel als Band zugeführten Vlies eingehen.

Wenn die Fasern des Vlieses aus härterem Maerial als das Profilteil bestehen, wird wiederum eine sehr gute Gleiteigenschaft des Dichtungs- oder Führungsprofils an der Fensterscheibe erreicht bei weiterhin ausreichend elastischem Profil. Bei ortsfester, gegenseitiger Anlage von Kunststoffprofil und Träger kann das Profilteil auch aus hartem Kunststoff besehen, da das polsterartige Vlies für die gleichmäßige, vollflächige, gegenseitige Anlage sorgt unter Vermeidung adhäsionsbedingter Geräusche bei Vibration.

Die gemeinsame Recyclebarkeit des Profilteils und der Gleitauflage wird insbesondere dadurch sichergestellt, daß das Vlies aus Polypropylenfasern hergestellt ist. Um eine ausreichende Aufnahmekapazität des Vlieses für kleine Sandkörner sicherzustellen, wird vorgeschlagen, daß die Dicke des Vlieses im Bereich von 0,2 mm bis 0,8 mm, vorzugsweise im Bereich von 0,3 mm bis 0,6 mm, am besten bei 0,5 mm liegt.

Die Gefahr des Verkratzens der zur Anlage bestimmten Oberfläche wird zusätzlich dadurch verringert, daß das Vlies in Längsrichtung des Profilteils verlaufende Vertiefungen aufweist. Die Vertiefungen können zur Aufnahme etwas größerer Staubkörner dienen.

Die Aufnahme von Sand- und Staubkörnern, deren Durchmesser größer als die Dicke des Vlieses ist, ist dann möglich, wenn längs der Vertiefungen des Vlieses verlaufende Vertiefungen des Profilteils vorgesehen sind, in die die Vertiefungen des Vlieses unter Umständen eindringen können.

Die Vertiefungen lassen sich in besonders einfacher Weise dadurch herstellen, daß die Vertiefungen des Vlieses und ggf. auch die Vertiefungen des Profilteils mittels geheizter Profilwalze hergestellt sind.

Durch das Vorsehen wenigstens einer in Längsrichtung des Profilteils verlaufenden Hohlkammer in dem zur Anlge an der Fensterscheibe vorgesehenen Abschnitt kann die Elastizität des Profilteils in diesem Abschnitt erhöht werden. Dadurch wird eine verbesserte Anpassung des Profilteils, z.B. an ein sich beim Bewegen einer Fensterscheibe veränderndes Profil der Fensterscheibe, erreicht. Ferner wird dadurch erreicht, daß das Profilteil stets mit seiner gesamten Anlagefläche an der Fensterscheibe anliegt.

Eine zusätzliche Verbesserung der Anpassung des zur Anlage z.B. an der Fensterscheibe vorgsehenen Abschnitts an das Profil der Fensterscheibe wird dadurch erreicht, daß die der Fensterscheibe zugewandte Wandung der Hohlkammer nach außen gewölbt ist.

Der Andruck des Profilteils an das jeweils zur Anlage bestimmte Teil kann dadurch erhöht werden, daß in dem Profilteil wenigstens ein in Längsrichtung des Profilteils verlaufendes Versteifungselement vorgesehen ist.

Dieser Ausdruck kann zusätzlich dadurch erhöht werden, daß das Versteifungselement in Richtung auf das bewegbare Teil zu gekrümmt ist.

Um bei möglichst gutem Andruck des Profilteils die Dichtungseigenschaft nicht zu beeinflussen, wird vorgeschlagen, daß das Versteifungselement in dem Bereich des Profilteils angeordnet ist, der zum Befestigen des Profilteils vorgesehen ist.

Um das Kunststoffprofil in einfacher Weise und ohne zusätzliche Hilfsmittel, wie z.B. Schrauben, Klemmen oder dgl., an dem zur Befestigung vorgesehenen Teil anbringen zu können, wird vorgeschlagen, daß an dem Profilteil ein Halteelement vorgesehen ist.

In besonders einfacher Weise ist das Kunststoffprofil z.B. an dem Umfangsrand eines Blechteils oder mehrerer im Randbereich zusammengeschweißter Blechteile anzubringen, wenn das Halteelement ein sich in Längsrichtung des Profilteil erstreckendes, im wesentlichen U-förmiges Klammerelement mit Seitenstegen und einem die Seitenstege verbindenden Verbindungssteg umfaßt, wobei an der Innenfläche von wenigstens einem der Seitenstege wenigstens ein zur Anlage an dem jeweiligen Teil vorgesehener Anlagesteg vorgesehen ist.

Wenn im Bereich des freien Endes von wenigstens einem der Seitenstege eine Rastnase zur Zusammenwirkung mit einem an dem jeweiligen Teil vorgesehenen Rastvorsprung angeordnet ist, dann ist das Kunststoffprofil in einfacher Weise gegen Abfallen bzw. Abziehen von dem jeweiligen Teil bei Krafteinwirkung, z.B. beim Öffnen oder schließen eines Fensters, gesichtert.

Um sicherzustellen, daß das Kunststoffprofil fest an dem jeweiligen Teil gehalten ist, wird vorgeschlagen, daß das Halteelement aus härterem Material besteht als das Profilteil.

Besonders kostengünstig ist das Kunststoffprofil mit dem Halteelement herzustellen, wenn das Halteelement mit dem Profilteil koextrudiert ist. Dieser Vorgang stellt zusätzlich sicher, daß das Halteelement und das Profilteil eine stoffbündige Verbindung eingehen, so daß auch bei stärkerer Krafteinwirkung das Profilteil in geeigneter Weise am Halteelement festgelegt ist.

Die Erfindung bezieht sich ferner auf die Verwendung der erfindungsgemäßen Kunststoffprofile in einer Automobiltüre.

Ferner bezieht sich die Erfindung auf die Verwendung der erfindungsgemäßen Kunststoffprofile zur Herstellung eines Kunststoff-Formteils. Dabei können unter Verwendung der erfindungsgemäßen Kunststoffprofile Kunststoff-Formteile, wie z.B. Dichtungsrahmenteile, hergestellt werden, welche dann als ganze Teile in die Automobile eingesetzt werden können. Dies vereinfacht den Einbauvorgang erheblich und macht zusätzliche Arbeitsschritte, durch welche einzelne Kunststoffprofile, z.B. durch Schweißen, miteinander verbunden werden müssen, überflüssig.

Dabei ist es bevorzugt, daß das Kunststoff-Formteil in einem Spritzgußverfahren hergestellt wird, bei welchem wenigstens ein Kunststoffprofil in eine Spritzgußform eingelegt wird und anschließend der Körper des Kunststoff-Formteils angespritzt wird. Bei diesem Spritzgußvorgang kann das wenigstens eine Kunststoffprofil eine stoffschlüssige Verbindung mit dem Formteilkörper eingehen, wodurch ein stabiles, gegen mechanische Beanspruchung unempfindliches Kunststoff-Formteil erzeugt wird.

Wird das Kunststoff-Formteil z.B. zur Verwendung als Dichtungs- oder Führungsprofil für eine in einer Automobiltüre bewegbar angeordnete Fensterscheibe vorgesehen, so ist es bevorzugt, daß das Kunststoff-Formteil die Form eines Fensterdichtungsrahmens mit einem Formteilkörper mit im wesentlichen U-förmigem Querschnitt aufweist, wobei jeweils an den Innenseiten der U-Schenkelabschnitte des Formteilkörpers ein Kunststoffprofil angeordnet ist. Durch ein derartiges Kunststoff-Formteil liegt jeweils an beiden Seiten der Fensterscheibe ein entsprechendes Kunststoffprofil an, so daß eine geeignete Führung und Abdichtung der Fensterscheibe vorgesehen ist.

Das Kunststoff-Formteil kann auch als Stoßleiste oder Zierleiste oder Fugenüberbrückungsleiste ausgebildet sein, wobei die Leistenlängsränder jeweils über ein insbesondere mit Vlies versehenes Kunststoffprofil am Träger anliegt.

Die Erfindung wird nachfolgend anhand bevorzugter Ausführungsbeispiele mit Bezug auf die beiliegenden Zeichnungen beschrieben. Es zeigt:
- Fig. 1: eine perspektivische Ansicht eines Abschnitts eines Dichtungs- oder Führungsprofils;
- Fig. 2: einen schematischen Querschnitt durch ein an einer Automobiltüre angebrachtes und an einer Fensterscheibe anliegendes Kunststoffprofil;
- Fig. 2A: eine alternative Art der Anbringung des Kunststoffprofils;
- Fig. 3: eine besonders zum Führen einer Fensterscheibe in einer Richtung parallel zur Bewegungsrichtung der Fensterscheibe geeignete Ausführungsform des Dichtungs- oder Führungsprofils;
- Fig. 4: einen Querschnitt durch die in Fig. 1 dargestellte Ausführungsform des Dichtungs- oder Führungsprofils;
- Fig. 5: einen Querschnitt durch eine weitere Ausführungsform des Dichtungs- oder Führungsprofils mit einer Hohlkammer in einem Endabschnitt und einem Versteifungselement in dem anderen Endabschnitt des Dichtungs- oder Führungsprofils;
- Fig. 6: einen Querschnitt durch eine erfindungesgemäße Ausführungsform des Dichtungs- oder Führungsprofils mit einem Vlies als Gleitauflage;
- Fig. 7: einen Querschnitt durch eine weitere Ausführungsform des Dichtungs- oder Führungsprofils mit einem Vlies als Gleitauflage, wobei zusätzliche Vertiefungen parallel zur Längsrichtung des Profilteils eingearbeitet sind;
- Fig. 8: einen Querschnitt durch ein Dichtungs- oder Führungsprofil mit Vlies als Gleitauflage, welches in seinem Auflagebereich in dem Profilteil eine Hohlkammer aufweist;
- Fig. 9: einen Querschnitt durch ein Dichtungs- oder Führungsprofil entsprechend der Fig. 8, jedoch zusätzlich mit den in Fig. 7 dargestellten, in Längsrichtung des Profilteils verlaufenden Vertiefungen;
- Fig. 10: eine Seitenansicht eines Fensterdichtungsrahmens;
- Fig. 11: eine Schnittansicht des Fensterdichtungsrahmens entlang einer Linie XI-XI in Fig. 10; und
- Fig. 12: eine Schnittansicht einer mit zwei Kunststoffprofilen an ihren Längsrändern an einem Träger anliegenden Fugenüberbrückungsleiste.

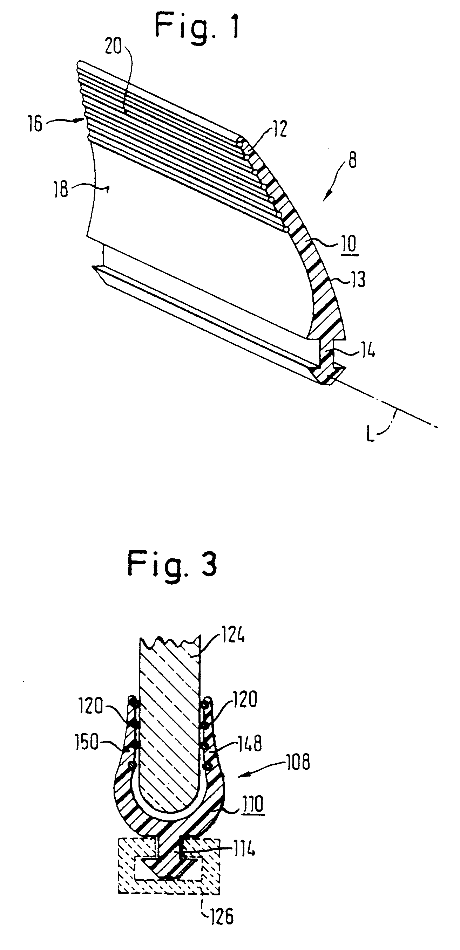

In Fig. 1 ist eine perspektivische Abbildung eines Kunststoffprofils 8 dargestellt. Das Kunststoffprofil 8 besteht aus einem langgestreckten Profilteil 10. Das Profilteil 10 weist im dargestellten Schnitt eine längliche Querschnittsform auf mit Endabschnitten 12 und 14 beidseits eines Mittelabschnitts 13. Im Bereich des Endabschnitts 12 ist eine Gleitauflage 16 an der zur Anlage vorgesehenen Seite 18 des Profilteils 10 angebracht. In einer ersten Ausführungsform ist die Gleitauflage 16 aus einer Mehrzahl von in Längsrichtung L des Profilteils 10 verlaufenden Dichtungsrippen 20 gebildet. Der Endabschnitt 14 dient zur Befestigung des Profilteils 10, z.B. an einer Automobiltüre.

Das Profilteil 10 und die Dichtungsrippen 20 sind jeweils aus Materialien hergestellt, die in einem Verarbeitungsvorgang miteinander verarbeitet werden können, und die dann, wenn das Kunststoffprofil nicht mehr verwendet wird, in einem gemeinsamen Arbeitsvorgang wieder aufbereitet werden können, ohne voneinander getrennt werden zu müssen. Als Material für das Profilteil wird bevorzugter Weise ein unter dem Handelnamen "Santoprene" erhältliches Elastomer verwendet. Dieses Material besteht aus einem Gemisch aus Polypropylen und EPDM (Ethylen/Propylen-Dien-Terpolymer). Dieses Material ist ausreichend elastisch, um eine Anpassung des Profilteils 10 an jede gebräuchliche Wölbung oder Struktur einer Automobilfensterscheibe oder eines sonstigen Automobilteils sicherzustellen.

Für die Dichtungsrippen 20 wird bevorzugterweise ein Kunststoff verwendet, welcher härter ist als der Kunststoff des Profilteils 10. Somit wird die Gleiteigenschaft des Kunststoffprofils 8 an der Fensterscheibe wesentlich verbessert. Ein Kunststoff, der zur Herstellung der Dichtungsrippen 10 geeignet ist, ist insbesondere Polyethylen. Polyethylen ist ein thermoplastischer Kunststoff, welcher ebenfalls durch Erhitzen aufgeschmolzen werden kann.

Im Vergleich zu einem herkömmlichen Profil mit Beflockung ergibt sich bei Verwendung des erfindungsgemäßen Kunststoffprofils mit Polyethylenrippen zum Abdichten und Führen einer bewegbar angebrachten Fensterscheibe eine Reduzierung der erforderlichen Fensterbetätigungskraft von ca. 50 %.

Aufgrund dieser Materialkombination für das Profilteil 10 und die Dichtungsrippen 20 ist es möglich, das Kunststoffprofil in einem Koextrusionsverfahren herzustellen. Dabei werden in einem Extrusionsvorgang sowohl das Profilteil 10 als auch die Dichtungsrippen 20 extrudiert, wobei das noch zähflüssige Material der Dichtungsrippen 20 mit dem ebenfalls zähflüssigen Material des Profilteils 10 eine stoffbündige Verbindung eingeht. Es wird somit kein zusätzlicher Klebstoff oder dergleichen zum Anbringen der Dichtungsrippen 20 an dem Profilteil 10 benötigt.

Nach Beendigung des Gebrauchs des Kunststoffprofils 8 kann dieses einfach durch Erhitzen aufgeschmolzen werden, da sowohl das Santoprene als auch das Polyethylen, wie bereits erwähnt, bei Zufuhr von Wärme schmelzen. Da Polyethylen und Santoprene beim Aufschmelzen sich miteinander verbinden, kann der somit gewonnene Kunststoff wiederum in den Produktionskreislauf zurückgeführt werden.

Für das Profilteil können auch andere Materialien, insbesondere Polyurethan, verwendet werden. In diesem Fall ist bevorzugt, daß die Dichtungsrippen aus einem Acrylat oder einem Acrylnitril-Butandien-Styrol Copolymer hergestellt sind. Somit bleibt die Möglichkeit der Herstellung der Kunststoffprofile in einem Koextrusionsverfahren und deren Recyclebarkeit nach Beendigung ihres Gebrauchs erhalten.

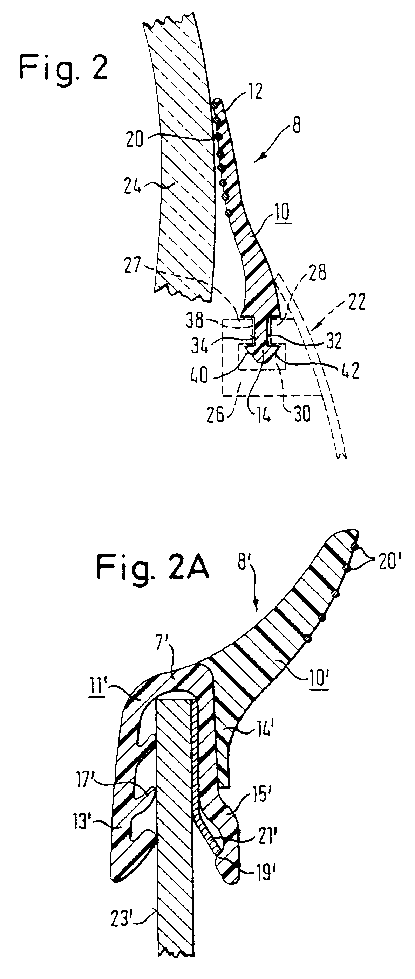

In Fig. 2 ist ein an einer Automobiltüre 22 angebrachtes und mit den Dichtungsrippen 20 an einer Fensterscheibe 24 anliegendes Profilteil 10 dargestellt. Das Profilteil 10 ist mit seinem Endabschnitt 14 in einem an der Automobiltüre 22 befestigten Hohlprofilteil 26 angebracht. Das Hohlprofilteil 26 weist an einer oberen Wand 27 eine in Längsrichtung des Profilteils (senkrecht zur Zeichenebene) verlaufende Öffnung auf, so daß eine Durchgangsöffnung 28 zu dem Innenraum 30 des Hohlprofilteils 26 gebildet ist.

Das Profilteil 10 weist in dem Endabschnitt 14 zwei an gegenüberliegenden Seiten des Profilteils 10 ausgebildete, in Längsrichtung des Profilteils 10 verlaufende Ausnehmungen 32 und 34 auf. Durch diese Ausnehmungen ist ein Abschnitt 38 mit geringerer Dicke an dem Profilteil 10 gebildet. Das Ende des Profilteils 10 wird durch zwei schräg aufeinander zulaufende Endflächen 40 und 42 gebildet.

Durch seitliches Einschieben des Endabschnitts 14 des Profilteils 10 in den Innenraum 30 des Hohlprofilteils 26 wird das Profilteil 10 an dem Hohlprofilteil 26 angebracht.

In der in Fig. 2 dargestellten Anordnung ist der Endabschnitt 12 des profilteils 10 frei beweglich und kann sich somit der Krümmung der Fensterscheibe 24 anpassen. Ferner ist in Fig. 2 zu erkennen, daß ausschließlich die Dichtungsrippen 20 der Gleitauflage 16 an der Fensterscheibe 24 anliegen. Somit wird in jeder Stellung der Fensterscheibe 24 ein dichter Abschluß zwischen dem Dichtungs- und Führungsprofil 8 und der Fensterscheibe 24 gewährleistet bei gleichzeitig optimaler Gleiteigenschaft der Fensterscheibe 24 an dem Dichtungs- oder Führungsprofil 8.

In Fig. 2A ist eine alternative Art der Anbringung des Kunststoffprofils dargestellt. In dieser Ausführungsform ist das Kunststoffprofil an einem Umfangsrand 23' eines Automobilteils, wie z.B. einem Türblechteil oder dgl. (nicht dargestellt), angebracht. An das Profilteil 10' wird in einem Koextrusionsverfahren gleichzeitig mit den Dichtungsrippen 20' ein im Querschnitt im wesentlichen U-förmiges Klammerelement 11' angeformt. Das Klammerelement 11' besteht bevorzugterweise aus dem gleichen Material wie die Dichtungsrippen 20', so daß durch das Klammerelement 11' eine ausreichende Steifigkeit zum Anbringen und Halten des Kunststoffprofils 8' an dem Randabschnitt 23' sichergestellt ist. Das Klammerelement 11' weist jeweilige Seitenstege 13' und 15' auf, zwischen welche der Randabschnitt 23' eingeführt ist, und welche durch einen Verbindungssteg 7' verbunden sind. An wenigstens einem der Seitenstege 13' oder 15', in dieser Ausführungsform an dem Seitensteg 13', sind Anlagestege 17' vorgesehen. Die Anlagestege 17' sind bezüglich des Seitenstegs 13' unter einem Winkel in Richtung auf den anderen Seitensteg 15' und den Verbindungssteg 7' zu geneigt und liegen im montierten Zustand des Kunststoffprofils 8' am Randabschnitt 23' an und drücken diesen gegen den Steg 15', so daß das Kunststoffprofil 8' auf dem Randabschnitt 23' klammerartig gehalten ist.

Zusätzlich kann, wie in Fig. 2A dargestellt, am Randabschnitt 23' ein Rastvorsprung 21' vorgesehen sein. Der Rastvorsprung 21' kann z.B. durch ein in einem Endabschnitt aufgebogenes und mit dem Randabschnitt 23' verbundenes Blech oder Kunststoffteil gebildet sein. Im Bereich des freien Endes des Seitenstegs 15' ist eine Rastnase 19' vorgesehen, welche dann, wenn der Randabschnitt 23' mit dem Rastvorsprung 21' vollkommen in das Halteelement 11' eingeschoben ist, den Rastvorsprung 21' hintergreift, und somit eine Sicherung gegen das Abziehen des Kunststoffprofils 8' vom Randabschnitt 23' vorsieht.

Das Halteelement kann in verschiedenen Ausführungsformen ausgeführt sein, z.B. kann das Halteelement mehrteilig ausgebildet sein, wobei dann ein äußeres Trägerelement mit dem Profilteil koextrudiert ist, und in das äußere Trägerteil ein wiederum im wesentlichen U-förmiges Einsatzteil mit den Anlagestegen und der Rastnase eingesetzt wird.

Im folgenden sind gleiche Elemente nachfolgend beschriebener Ausführungsformen des erfindungsgemäßen Kunststoffprofils mit denselben Bezugszeichen, jedoch jeweils um die Zahl 100 erhöht, bezeichnet.

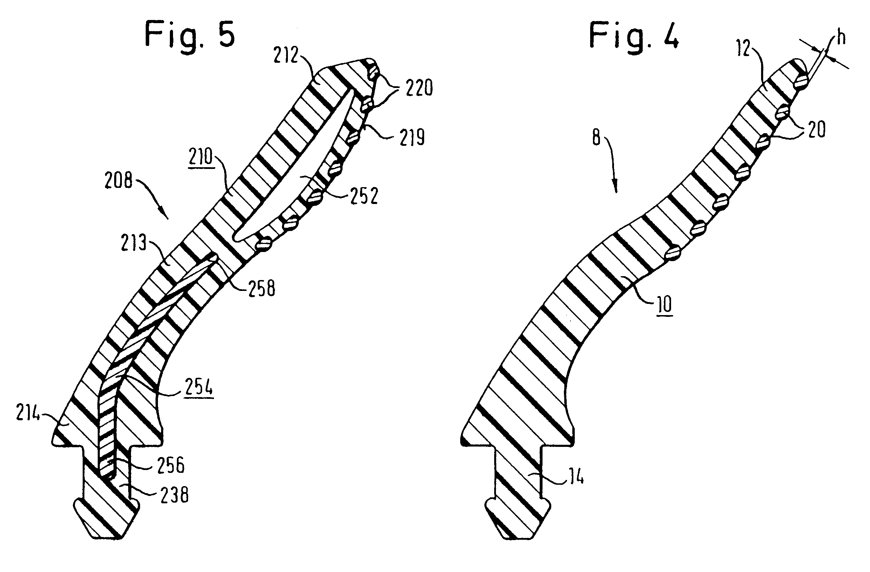

In Fig. 3 ist ein Kunststoffprofil 108 dargestellt, welches sich insbesondere zum Führen einer Fensterscheibe 124 in einer Richtung parallel zur Bewegungsrichtung der Fensterscheibe 124 eignet. Das Kunststoffprofil 108 ist wiederum an einem Hohlprofilteil 126 angebracht, welches z.B. an den vertikalen Rahmenabschnitten des Fensterrahmens an der Automobiltüre angebracht sein kann.

Das Kunststoffprofil umfaßt ein Profilteil 110, welches einen im wesentlichen U-förmigen Querschnitt aufweist. Zwei Profilabschnitte 148 und 150 des Profilteils 110 liegen jeweils mittels in diesen Abschnitten vorgesehener Dichtungsrippen 120 an entgegengesetzten Seiten der Fensterscheibe 124 an. Die beiden Profilabschnitte 148,150 sind in ihrem Grundzustand aufeinander zu geneigt, um im Einbauzustand einen Druck auf beide Seiten der Fensterscheibe 124 auszuüben, so daß ein dichter Abschluß zwischen dem Profilteil 110 und der Fensterscheibe 124 gewährleistet ist.

Der Endabschnitt 114 des Profilteils 110 ist entsprechend dem in den Fig. 1 und 2 dargestellten Endabschnitt 14 ausgebildet, und entsprechend der Fig. 2 an einem Hohlprofil 126 festgelegt.

In Fig. 4 ist ein Querschnitt des in den Fig. 1 und 2 abgebildeten Kunststoffprofils 8 dargestellt. Wie bereits mit Bezug auf die Fig. 1 und 2 beschrieben, umfaßt die Gleitauflage des Kunststoffprofils 8 eine Mehrzahl von in Längsrichtung des Profilteils 10 parallel nebeneinander verlaufenden Dichtungsrippen 20.

Wie man in Fig. 4 ferner erkennt, weisen die Dichtungsrippen 20 einen im wesentlichen kreisförmigen Durchmesser auf. Somit ist sichergestellt, daß das Kunststoffprofil 8 in jeder Richtung quer zur Längsrichtung des Profilteils 10 die gleichen Gleiteigenschaften aufweist. Die Höhe h, um welche die Dichtungsrippen 20 über die Oberfläche des Profilteils 10 vorstehen, ist so gewählt, daß nur die Dichtungsrippen 20 an der Fensterscheibe anliegen. Somit wird eine Beeinträchtigung der Gleiteigenschaft durch ein Anliegen des relativ weichen Profilteils 10 an der Fensterscheibe vermieden.

Das Profilteil 10 ist quer zu seiner Längsrichtung in Richtung auf die Fensterscheibe zu gekrümmt. Somit wird eine Vorspannung des Profilteils 10 erreicht. Zusätzlich bleibt durch das Vorsehen von einzelnen, in Querrichtung voneinander beabstandeten Dichtungsrippen die Elastizität des Profilteils 10 sowohl in Längsrichtung des Profilteils 10 als auch quer zur Längsrichtung voll erhalten. Somit ist in jeder Öffnungsstellung der Fensterscheibe durch eine optimale Anpassung des Kunststoffprofils 8 an die Form der Oberfläche der Fensterscheibe eine optimale Dichtungswirkung gewährleistet.

Auch besteht bei derartigen Kunststoffprofilen nicht die Gefahr, daß in der Gleitauflage Wasser gebunden wird, weiches bei niedrigen Temperaturen an der Fensterscheibe anfrieren kann. Eine Schwergängigkeit des Betätigungsmechanismus für die Fensterscheibe oder sogar eine Beschädigung dieses Mechanismus wird somit vermieden.

In Fig. 5 ist eine weitere Ausführungsform des Kunststoffprofils mit Dichtungsrippen als Gleitauflage abgebildet. In dieser Ausführungsform weist das Kunststoffprofil 208 in dem Endabschnitt 212, in dem die Dichtungsrippen 220 angeordnet sind, eine in Längsrichtung des Profilteils verlaufende Hohlkammer 252 auf. Die Seitenwandung 219 der Hohlkammer 252, an welcher die Dichtungsrippen 220 vorgesehen sind, und welche zur Anlage an einer Fensterscheibe bestimmt ist, ist in Richtung auf die Fensterscheibe zu nach außen gewölbt, so daß sich in dem Endabschnitt 212 eine zusätzliche Ausbauchung des Profilteils 210 ergibt. Dies führt zu einer erhöhten Elastizität des Profilteils 210 im Bereich des zur Anlage an der Fensterscheibe bestimmten Endabschnitts 212. Somit wird die Anpassungsfähigkeit des Profilteils 210 an sich verändernde Krümmungen der Fensterscheibe beim Öffnen oder Schließen der Fensterscheibe erheblich verbessert. Zusätzlich wird durch das Vorsehen der Hohlkammer 252 die Fläche des an der Fensterscheibe anliegenden Abschnitts des Kunststoffprofils 208 vergrößert. Dies führt zu einer Verbesserung der Dichtungswirkung des Kunststoffprofils 208 sowie zu einer verbesserten Schallisolierung gegen an der Außenseite des Fahrzeugs auftretende Fahrgeräusche.

Ferner ist in dieser Ausführungsform in dem Kunststoffprofil 208 in dem Endabschnitt 214 ein Versteifungselement 254 vorgesehen. Das Versteifungselement 254 erstreckt sich mit einem Ende 256 teilweise in den Abschnitt 238 mit geringerer Dicke und mit einem Ende 258 bis in den Mittelabschnitt 213. Das Versteifungselement 254 ist in Richtung auf die Fensterscheibe zu gekrümmt. Dadurch, daß sich das Versteifungselement 254 mit seinem Endabschnitt 256 in dem in einem Hohlprofil festgelegten Endabschnitt 214 des Profilteils 210 abstützt, wird durch das Vorsehen der Krümmung des Versteifungselements 254 der Anpreßdruck des Profilteils 210 an die Fensterscheibe zusätzlich erhöht. Dies hat zur Folge, daß die an der Fensterscheibe anliegende Fläche des Kunststoffprofils 208 im Bereich des Endabschnitts 258 des Versteifungselements 254 noch zusätzlich vergrößert werden kann und somit die Dichtungs- und Schallisolierungseigenschaften des Kunststoffprofils 208 zusätzlich verbessert werden.

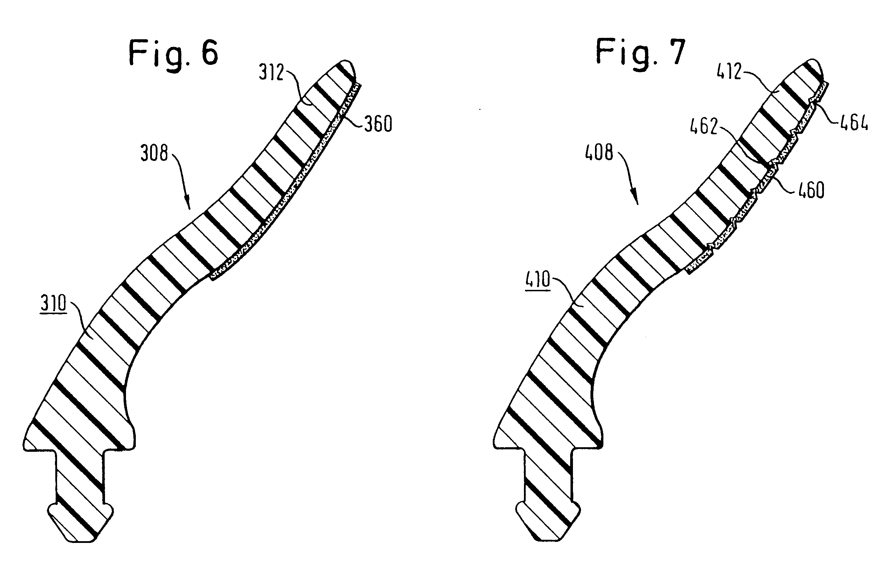

In Fig. 6 ist eine Ausführungsform eines erfindungsgemäßen Kunststoffprofils dargestellt. Dabei entspricht das Profilteil 310 im wesentlichen dem in den Fig. 1, 2 und 4 dargestellten Profilteil 10. In dieser Ausführungsform ist jedoch die Gleitauflage ein in dem Endabschnitt 312 angebrachtes, in Längsrichtung des Profilteils 310 verlaufendes Vlies 360. Um auch in dieser Ausführungsform das Kunststoffprofil 308 in einem Arbeitsvorgang herstellen zu können, besteht das Vlies aus thermoplastischem Material. Bevorzugterweise wird ein aus Polypropylenfasern hergestelltes Vlies verwendet in Kombination mit einem Profilteil aus Polypropylen. Bei einem Profilteil aus ABS (Acryl-Nitril-Butatien-Styrol) oder PVC (Polyvinylchlorid) kann ein Acrylfaser-Vlies verwendet werden.

Das Vlies wird beim Extrusionsvorgang des Profilteils z.B. von einer Rolle abgerollt und mittels einer Anpreßrolle an das aus dem Extruder austretende Profilteil angepreßt. Dadurch geht das Vlies eine stoffbündige Verbindung mit dem Profilteil ein. Es sind somit auch in dieser Ausführungsform keine zusätzlichen Klebstoffe zum Verbinden der Gleitauflage mit dem Profilteil erforderlich.

Da auch in dieser erfindungsgemäßen Ausführungsform das Profilteil, wie bereits im Zusammenhang mit dem in den Fig. 1 und 4 dargestellten Profilteil erwähnt wurde, aus einem Material besteht, das durch Erhitzen aufgeschmolzen werden kann, und das Vlies aus einem thermoplastischen Kunststoff besteht, ist auch bei dieser Ausführungsform eine Wiederverarbeitung des Kunststoffprofils möglich.

Alternativ dazu kann das Vlies auch in einem nachgeschalteten Arbeitsvorgang, z.B. durch Aufkleben, an dem Profilteil angebracht werden. Auch in diesem Fall ist, je nach Auswahl des Klebstoffs, eine Wiederaufbereitung des Kunststoffprofils möglich.

Beim Gebrauch an einem Automobil sind die Kunststoffprofile der Verschmutzung durch Staub oder Sandkörner ausgesetzt. Bei einer Ansammlung von Staub oder Sandkörnern zwischen der Gleitauflage und der Fensterscheibe besteht somit die Gefahr, daß nach einiger Zeit im Gebrauch ein Verkratzen der Fensterscheibe auftritt. Durch das Verwenden eines Vlieses als Gleitauflage kann jedoch das Verkratzen der Fensterscheibe erheblich reduziert werden. Bei geeigneter Auswahl der Dicke des Vlieses ist das Vlies in der Lage, feine Staub- oder Sandkörner in seinem Volumen aufzunehmen und somit ein Reiben dieser Körner an der Fensterscheibe zu verhindern.

Da die an der Fensteraustrittsöffnung horizontal angebrachten Kunststoffprofile einer derartigen Verschmutzung sehr stark ausgesetzt sind, ist es zweckmäßig, in diesem Bereich Kunststoffprofile zu verwenden, deren Gleitauflage ein Vlies ist.

In Fig. 7 ist eine weitere Ausführungsform des Kunststoffprofils dargestellt, welche im wesentlichen eine Weiterbildung der in Fig. 6 dargestellten Ausführungsform ist. Auch in dieser Ausführungsform wird ein Vlies 460 als Gleitauflage verwendet. Das Profilteil 410 entspricht im wesentlichen dem in den Fig. 1, 2 und 4 dargestellten Profilteil 10. Bei dieser Ausführungsform weisen jedoch das Profilteil 410 und das Vlies 460 in dem zur Anlage an der Fensterscheibe bestimmten Endabschnitt 412 eine Mehrzahl von im wesentlichen V-förmigen Vertiefungen 462 bzw. 464 auf. Die einzelnen Vertiefungen 462 bzw. 464 verlaufen parallel zueinander in Längsrichtung des Profilteils 410 und dienen zusätzlich zur Aufnahme von Staub oder Sandkörnern. Insbesondere können sich in diesen Bereichen größere Staub- oder Sandkörner ansammeln. Ein mit der Zeit auftretendes Verkratzen der Fensterscheibe wird somit zusätzlich verringert.

Die Vertiefungen 462 in dem Profilteil 410 können beim Aufbringen des Vlieses 460 auf das Profilteil 410 gebildet werden, indem das Vlies mittels einer heißen Rolle an das Profilteil 410 angepreßt wird. Wenn die Rolle eine Mehrzahl von im wesentlichen V-förmigen Radialvorsprüngen an ihrer äußeren Umfangsfläche aufweist, wird somit in dem Bereich, in dem das Vlies 460 durch die Rolle an das Profilteil 410 angedrückt wird, sowohl das Vlies als auch das Profilteil 410 erhitzt, so daß diese unter Bildung der V-förmigen Vertiefungen 462 bzw. 464 in diesen Bereichen eine stoffbündige Verbindung eingehen. Somit ist es möglich, in einem Arbeitsvorgang das Vlies 460 an dem Profilteil 410 anzubringen und gleichzeitig die Vertiefungen 462 bzw. 464 zu bilden.

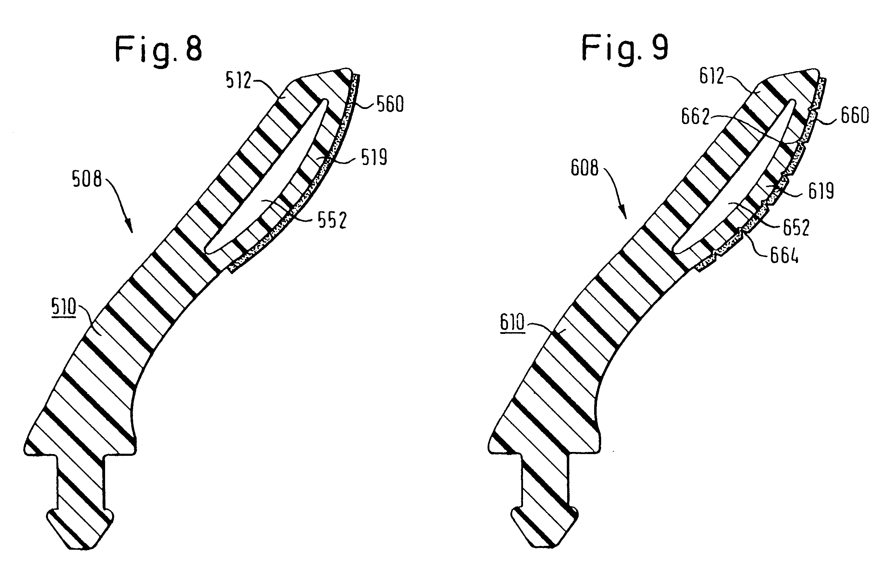

In den Fig. 8 und 9 sind jeweils weitere Ausführungsformen des erfindungsgemäßen Kunststoffprofils dargestellt. Bei dem in Fig. 8 dargestellten Kunststoffprofil 508 ist die Gleitauflage wiederum von einem Vlies 560 gebildet. Das Profilteil 510 weist, wie bereits in der Ausführungsform in Fig. 5 dargestellt, in dem zur Anlage an der Fensterscheibe vorgesehenen Endabschnitt 512 eine Hohlkammer 552 auf. Die mit dem Vlies 560 verbundene Wandung 519 der Hohlkammer 512 ist wiederum nach außen gewölbt. Es ergeben sich somit wieder die Vorteile, daß durch die erhöhte Elastizität des Profilteils 510 und einer somit vergrößerten Anlagefläche des Kunststoffprofils 508 an der Fensterscheibe sowohl die Dichtungswirkung als auch die Dämpfung von Fahrgeräuschen verbessert wird.

Die in Fig. 9 dargestellte Ausführungsform entspricht im wesentlichen der in Fig. 8 dargestellten Ausführungsform. In dieser Ausführungsform sind jedoch zusätzlich die bereits in der Ausführungsform der Fig. 7 beschriebenen Vertiefungen 662 bzw. 664 im Profilteil 610 bzw. im Vlies 660 vorgesehen. Somit kann durch diese Ausrührungsform zusätzlich ein Verkratzen der Fensterscheibe durch zwischen der Fensterscheibe und der Gleitauflage angesammelte Körper verringert werden.

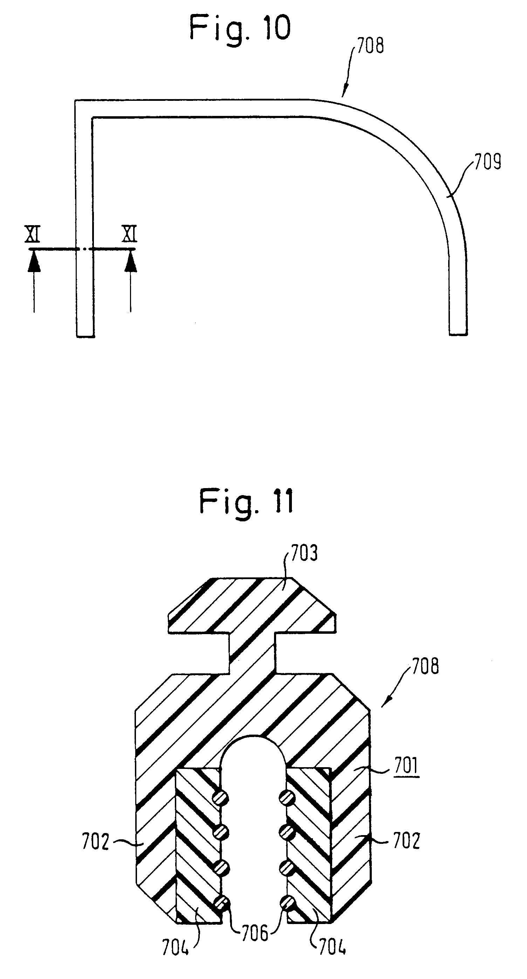

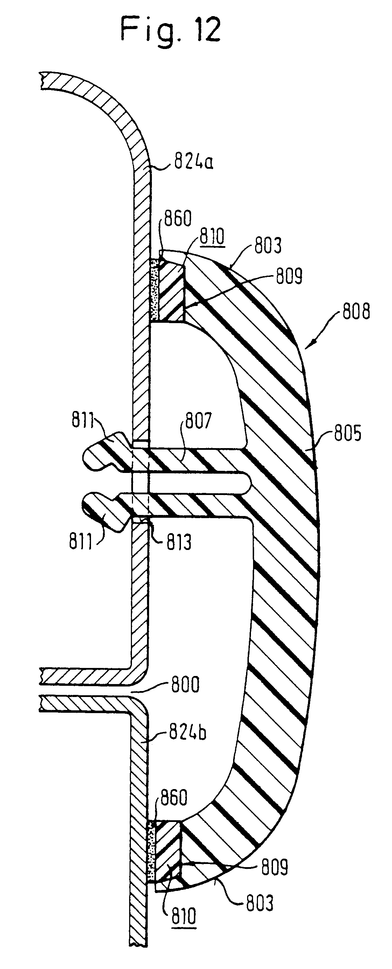

In den Fig. 10 und 11 ist eine weitere Ausführungsform bzw. Anwendungsart eines Kunststoffprofils dargestellt. Wie insbesondere in Fig. 10 zu erkennen ist, ist ein Dichtungsrahmen 708 vorgesehen, dessen Form im wesentlichen der Umfangsform, z.B. einer in einer Automobiltüre bewegbar angeordneten Fensterscheibe entspricht. Dabei ist insbesondere ein gekrümmter Abschnitt 709 der der Krümmung bzw. Schräge der A-Säule angepaßten vorderen bzw. oberen Kante der Fensterscheibe angepaßt. Wie insbesondere im Querschnitt der Fig. 11 zu erkennen ist, umfaßt der im wesentlichen U-förmig ausgebildete Dichtungsrahmen 708 einen Körper 701 mit jeweiligen Schenkelabschnitten 702. An dem den Schenkeln 702 entgegengesetzten Ende des Körpers 701 ist, wie bereits in den Ausführungsformen der Fig. 1 bis 9 dargestellt, ein im Querschnitt im wesentlichen T-förmiger Fortsatz 703 vorgesehen zum Anbringen des Dichtungsrahmens an einer Automobiltüre in einer bereits vorher beschriebenen Art und Weise. An den einander zugewandten Flächen der Schenkelabschnitte 702 sind jeweils die erfindungsgemäßen Kunststoffprofile 704 mit Dichtungsrippen 706 als Gleitauflagen für die Fensterscheiben (nicht dargestellt) vorgesehen. Anstelle der Dichtungsrippen 706 ist es ebenso möglich, die mit Bezug auf die Fig. 6 bis 9 beschriebenen Kunststoffprofile mit einem Vlies als Gleitauflage zu verwenden.

Der als Kunststoff-Formteil hergestellte Dichtungsrahmen 708 wird in einem Spritzgußverfahren hergestellt. Dabei werden zunächst die Kunststoffprofile 704 in eine Spritzgußform eingelegt, worauf folgend die Spritzgußform mit dem den Körper des Kunststoff-Formteils bildenden Kunststoff unter Druck ausgespritzt wird.

Beim Ausspritzen der Spritzgußform mit dem unter Druck stehenden und noch flüssigen Kunststoff wird durch die hohe Temperatur des flüssigen Kunststoffs auch die Oberfläche der Kunststoffprofile 704 erhitzt und in einem Oberflächenbereich flüssig gemacht, so daß in den Bereichen, in welchen die Oberfläche der Kunststoffprofile 704 für die Kontaktierung mit noch flüssigem Kunststoff frei sind, eine stoffschlüssige Verbindung zwischen den Profilteilen 704 und dem den Körper 701 bildenden Kunststoff erreicht wird.

Auf diese Weise kann ohne die Verwendung zusätzlicher Klebstoffe ein stabiler, gegen mechanische Beanspruchung im wesentlichen unempfindlicher Dichtungsrahmen für ein Fenster vorgesehen werden, welcher dann bereits jeweils exakt der Außenumfangsform der Fensterscheibe angepaßt ist.

Das beim Verwenden einzelner Profilteile zum Dichten und Führen einer Fensterscheibe erforderliche Aneinanderfügen der Profilteile im Bereich ihrer Stöße, z.B. durch Verschweißen der Profilteile, ist bei diesem Kunststoff-Formteil nicht mehr erforderlich. Auch wird die Einbauarbeit wesentlich vereinfacht, da lediglich ein bereits der Form des Fensters und somit des Fensterrahmens angepaßter Dichtungsrahmen in entsprechend geformte und am Fensterrahmen vorgesehene Nuten eingeführt werden muß.

Das erfindungsgemäße Kunststoffprofil oder Kunststoff-Formteil kann an verschiedenen, an einem Kraftfahrzeug vorgesehenen bewegbaren oder nicht bewegbaren Bauteilen angeordnet sein. Derartige Bauteile können z.B. an einer Fahrzeugkarosserie angebrachte Zierleisten oder Kunststoffblenden oder Stoßfängerschürzen sein, welche direkt auf der an der Fahrzeugkarosserie vorgesehenen Lackschicht aufliegen. Da, wie bereits erwähnt, durch die Vibrationen des Kraftfahrzeugmotors hervorgerufene Schwingungen der Fahrzeugkarosserie und der an der Karosserie anliegenden Teile durch die Adhäsionswirkung zwischen Karosserie und den Teilen Quietschgeräusche hervorrufen können, ist es vorteilhaft, das erfindungsgemäße Kunststoffprofil zwischen derartigen Teilen anzuordnen. Dabei können beim erfindungsgemäßen Kunststoffprofil z.B. an beiden Seiten des Kunststoffprofils, an welchen jeweils die Teile, d.h. Kraftfahrzeugkarosserie und z.B. Zierleiste anliegen, entsprechende Gleitauflagen aus Vlies vorgesehen sein, so daß eine direkte Berührung der verschiedenen Bauteile vermieden wird. Aufgrund der hervorragenden Gleiteigenschaften der Gleitauflagen der erfindungsgemäßen Kunststoffprofile werden nunmehr die verschiedenen Teile nicht mehr an ihren Schwingungsbewegungen gehindert, so daß auch das Auftreten von Quietschgeräuschen vermieden wird.

In Fig. 12 ist ein derartiges Kunststoff-Formteil 808 angedeutet, welches dazu dient, eine Fuge 800 zwischen zwei Karosserieteilen 824a und 824b zu überbrücken. Das Kunststoff-Formteil 808 liegt über zwei Kunststoffprofile 809 an den beispielsweise lackierten Teilen 824a,824b an, die sich jeweils im Bereich der beiden Längsränder 803 des leistenartigen, von den Teilen 824a,824b weggewölbten Kunststoff-Formteils 808 erstrecken. Der Querschnitt des Formteils 808 kann als im wesentlichen U-förmig oder V-förmig bezeichnet werden. Die Leistenenden können je nach den Anbringungsbedingungen offen oder geschlossen sein; dies deshalb, weil das Kunststoff-Formteil 808 ebenso wie der vorstehend beschriebene Dichtungsrahmen 708 dadurch hergestellt wird, daß als erstes die vorher in einem Extrusionsverfahren hergestellten Kunststoffprofile 809 in eine entsprechende Spritzgußform eingelegt werden und anschließend der eigentliche Leistenkörper 805 an die Profilteile 810 der Kunststoffprofile 809 angespritzt wird.

Die Befestigung am jeweiligen Träger kann in üblicher Weise durch Verkleben oder Verklipsen erfolgen. In Fig. 12 ist ein vom Körper 805 nach innen abstehender Klipsfuß 807 angedeutet, der eine entsprechende Klipsöffnung 813 im Teil 824a durchsetzt und den entsprechenden Öffnungsinnenrand mittels zweier Spreizköpfe 811 hintergreift.

Das an den beiden Profilteilen 810 jeweils angebrachte Vlies 860 sorgt für eine vollflächige Anlage der beiden Leistenränder an den Teilen 824a,824b, so daß sich ein optisch ansprechender und auch weitgehend dichter Abschluß zwischen Leiste und Träger ergibt. Gleichzeitig schließt das Vlies 860 eine gegenseitig haftende Anlage aus, so daß hierauf zurückzuführende Quietschgeräusche bei z.B. vibrationsbedingten Relativbewegungen zwischen Leistenrand und Träger von vorneherein vermieden werden. Sowohl das Profilteil 810 als auch der Körper 805 können hierbei auch aus hartem Kunststoff bestehen.

Eine weitere Anwendungsart für die in Fig. 12 dargestellte Leiste ist die einer Stoßleiste oder Zierleiste. Ferner kann sie auch als Abdeckleiste eingesetzt werden, beispielsweise zur Abdeckung der C-Säule in einem Kraftfahrzeug. Hierbei kann die Leiste mit einem ihrer Längsränder unmittelbar über das Vlies an der Heckscheibe anliegen, im Gegensatz zu bisher üblichen Abdeckleisten, die Abstand zur Heckscheibe einhalten, um Quietschgeräusche zu vermeiden.

Ferner können die erfindungsgemäßen Kunststoffprofile, insbesondere die erfindungsgemäßen Kunststoff-Formteile bzw. Dichtungsrahmen, zum Abdichten von an einer Fahrzeugkarosserie bewegbar angebrachten Teilen, wie z.B. einer Kraftfahrzeugtür oder einem Kofferraumdeckel, verwendet werden. Da auch bei diesen an der Karosserie bewegbar angebrachten Teilen durch die Vibrationen des Kraftfahrzeugmotors hervorgerufene Relativbewegungen bezüglich der Karosserie auftreten können, ist es vorteilhaft, auch zum Abdichten dieser Bauteile die erfindungsgemäßen Kunststoffprofile zu verwenden, da somit wiederum die durch die Anlage herkömmlicher Gummdichtungen hervorgerufenen Quietschgeräusche vermieden werden können.

Die vorliegende Erfindung sieht ein Kunststoffprofil, insbesondere zur Anlage an einer in einer Automobiltüre bewegbar angeordneten Fensterscheibe, vor. Das Kunststoffprofil besteht aus einem langgestreckten Profilteil aus elastomerem Material und aus einer Gleitauflage aus thermoplastischem Material. Durch die Materialauswahl von Profilteil und Gleitauflage ist es möglich, diese in einem Herstellungsvorgang zusammen herzustellen und ohne die Verwendung zusätzlicher Klebstoffe stoffbündig miteinander zu verbinden. Somit wird die Anzahl der zur Herstellung des Dichtungs- oder Führungsprofils nötigen Arbeitsschritte deutlich verringert. Zusätzlich sind derartige Kunststoffprofile aufgrund der Auswahl geeigneter Materialien wiederverwertbar.

Die Gleitauflage besteht aus einem Vlies, welches beim Herstellungsvorgang des Profilteils auf das Profilteil aufgebracht werden kann. Eine derartige Gleitauflage hat die Eigenschaft, daß Staub oder Sandkörner, die zwischen die Fensterscheibe und die Gleitauflage gelangen, in der Gleitauflage aufgenommen werden. Somit wird ein mit der Zeit auftretendes Verkratzen der Fensterscheibe deutlich verringert. Auch in dieser Ausführungsform ist aufgrund der Auswahl der Materialien für das Profilteil und für das Vlies das Dichtungs- oder Führungsprofil wiederverwertbar.

Das Verwenden der erfindungsgemäßen Kunststoffprofile zur Herstellung eines Kunststoff-Formteils, wie z.B. einem Fensterdichtungsrahmen, ermöglicht es, ein Formteil vorzusehen, welches in besonders einfacher Weise in das Automobil eingebaut werden kann, und bei welchem alle durch das erfindungsgemäße Kunststoffprofil vorgesehenen Vorteile vorhanden sind.

Insbesondere die hervorragende Gleiteigenschaft des erfindungsgemäßen Kunststoffprofils ermöglicht ebenfalls die Verwendung dieser erfindungsgemäßen Kunststoffprofile zum Anordnen zwischen z.B. einer Kraftfahrzeugkarosserie und einem an der Karosserie vorgesehenen Bauteil, wie z.b. einer Zierleiste, wodurch durch die Reibung der beiden Teile aneinander hervorgerufenen Quietschgeräusche vermieden werden können.

## Patentansprüche

1. Kunststoffprofil, welches an einem Trägerteil, insbesondere einer Automobiltüre oder einer Automobilkarosserie anbringbar ist zur Anlage am Trägerteil, insbesondere an einem lackierten Fahrzeugteil und/oder an einem weiteren Teil, welches relativ zum Trägerteil starr oder bewegbar ist, insbesondere einer Glasscheibe, umfassend ein langgestrecktes Profilteil (310;410;510;610;810) aus hartem oder elastomerem Material sowie eine an dem Profilteil vorgesehene und an dem jeweiligen Teil (824a,824b) anliegende Gleitauflage,
dadurch gekennzeichnet,
daß die Gleitauflage ein in Längsrichtung des Profilteils verlaufendes Vlies (360;460;560;660;860) ist.

2. Kunststoffprofil nach Anspruch 1,
dadurch gekennzeichnet,
daß das Vlies (360;460;560;660;860) aus einem Thermoplast besteht, und daß Gas Profilteil (310;410;510,610;810) aus einem Thermoplast ggf. mit elastomeren Eigenschaften besteht.

3. Kunststoffprofil nach Anspruch 1 oder 2,
dadurch gekennzeichnet,
daß das Vlies (360;460;560;660;860) aus Polypropylen-Fasern und das Profilteil (310;410;510;610;810) aus einem Polypropylen-Polymer hergestellt sind.

4. Kunststoffprofil nach einem der Ansprüche 1 bis 3,
dadurch gekennzeichnet,
daß das Vlies (360;460;560;660;860) aus Acryl-Fasern und das Profilteil (310;410;510;610;810) aus einem Polyvinylchlorid-Polymer oder aus einem Acrylnitril-Butadien-Styrol-Polymer hergestellt sind.

5. Kunststoffprofil nach einem der Ansprüche 1 bis 4,
dadurch gekennzeichnet,
daß das Vlies (360;460;560;660;860) beim Extrusionsvorgang auf das Profilteil (310;410;510;610;810) aufgebracht wird.

6. Kunststoffprofil nach einem der Ansprüche 1 bis 5,
dadurch gekennzeichnet,
daß die Fasern des Vlieses (360;460;560;660;860) aus härterem Material als das Profilteil (310;410;510;610;810) bestehen.

7. Kunststoffprofil nach einem der Ansprüche 1 bis 6,
dadurch gekennzeichnet,
daß die Dicke des Vlieses (360;460;560;660;860) im Bereich von 0,2 mm bis 0,8 mm, vorzugsweise im Bereich von 0,3 mm bis 0,6 mm, am besten bei 0,5 mm, liegt.

8. Kunststoffprofil nach einem der Ansprüche 1 bis 7,
dadurch gekennzeichnet,
daß das Vlies (460;660) in Längsrichtung des Profilteils (410;610) verlaufende Vertiefungen (464;664) aufweist, die vorzugsweise längs entsprecnender Vertiefungen (464;664) des Profilteils (410; 660) verlaufen.

9. Kunststoffprofil nach Anspruch 8,
dadurch gekennzeichnet,
daß die Vertiefungen (464;664) des Vlieses (460;660) und ggf. auch die Vertiefungen (462;662) des Profilteils (410;610) mittels geheizter Profilwalze hergestellt sind.

10. Kunststoffprofil nach einem der vorhergehenden Ansprüche,
dadurch gekennzeichnet,
daß in dem Profilteil (210;510;610) in dem zur Anlage an der Fensterscheibe vorgesehenen Abschnitt (212;512;612) wenigstens eine in Längsrichtung des Profilteils (210;510;610) verlaufende Hohlkammer (252;552;652) vorgesehen ist.

11. Kunststoffprofil nach Anspruch 10,
dadurch gekennzeichnet,
daß die der Fensterscheibe zugewandte Wandung (219;519;619) der Hohlkammer (262;552;652) nach außen gewölbt ist.

12. Kunststoffprofil nach einem der vorhergehenden Ansprüche,
dadurch gekennzeichnet,
daß in dem Profilteil (210) wenigstens ein in Länsrichtung des Profilteils (210) verlaufendes Versteifungselement (254) vorgesehen ist.

13. Kunststoffprofil nach Anspruch 12,
dadurch gekennzeichnet,
daß das Versteifungselement (254) in seiner Querrichtung in Richtung auf das Teil zu gekrümmt ist.

14. Kunststoffprofil nach Anspruch 12 oder 13,
dadurch gekennzeichnet,
daß das Versteifungselement (254) im Bereich des zum Befestigen des Profilteils (210) vorgesehenen Endes (214) angeordnet ist.

15. Kunststoffprofil nach einem der vorhergehenden Ansprüche,
dadurch gekennzeichnet,
daß am Profilteil (10; 10') ein Halteelement (14,11') vorgesehen ist, mit welchem das Profilteil an dem zur Befestigung des Profilteils vorgesehenen Teil anbringbar ist.

16. Kunststoffprofil nach Anspruch 15,
dadurch gekennzeichnet,
daß das Halteelement ein sich in Längsrichtung des Profilteil (10') erstreckendes, im wesentlichen U-förmiges Klammerelement (11') mit Seitenstegen (13',15') und einen die Seitenstege (13',15') verbindenden Verbindungssteg (7') umfaßt, wobei an der Innenfläche von wenigstens einem der Seitenstege (13',15') wenigstens ein zur Anlage an dem jeweiligen Teil vorgesehener Anlagesteg (17') vorgesehen ist.

17. Kunststoffprofil nach Anspruch 16,
dadurch gekennzeichnet,
daß im Bereich des freien Endes von wenigstens einem der Seitenstege (13',15') eine Rastnase (19') zur Zusammenwirkung mit einem an dem jeweiligen Teil vorgesehenen Rastvorsprung (21') angeordnet ist.

18. Kunststoffprofil nach einem der Ansprüche 15 bis 17,
dadurch gekennzeichnet,
daß das Halteelement (11') aus härterem Material besteht als das Profilteil (10').

19. Kunststoffprofil nach einem der Ansprüche 15 bis 18,
dadurch gekennzeichnet,
daß das Halteelement (11') mit dem Profilteil koextrudiert ist.

20. Verwendung des Kunststoffprofils gemäß einem der vorhergehenden Ansprüche zum Führen einer in einer Automobiltüre bewegbar angeordneten Fensterscheibe an wenigstens einem der beiden Seitenränder der Fensterscheibe.

21. Verwendung des Kunststoffprofils gemäß einem der Ansprüche 1 bis 9 zum Abdichten einer in einer Automobiltüre bewegbar angeordneten Fensterscheibe am Fensterscheiben-Austrittsschlitz der Automobiltüre.

22. Verwendung wenigstens eines Kunststoffprofils nach einem der Ansprüche 1 bis 19 zur Herstellung eines Kunststoff-Formteils durch stoffschlüssiges Anformen eines Formteilkörpers an das wenigstens eine Kunststoffprofil.

23. Verwendung nach Anspruch 22,
dadurch gekennzeichnet,
daß das wenigstens eine Kunststoffprofil in eine Spritzgußform eingelegt wird und anschließend der Formteilkörper angespritzt wird.

24. Kunststoff-Formteil zur Anbringung an einem Trägerteil, insbesondere einer Automobiltüre oder einer Automobilkarosserie, bestehend aus wenigstens einem Kunststoffprofil nach einem der Ansprüche 1 bis 19 und einem an das wenigstens eine Kunststoffprofil stoffschlüssig angeformten Formteilkörper.

25. Kunststoff-Formteil nach Anspruch 24,
dadurch gekennzeichnet,
daß das Kunststoff-Formteil die Form eines Fensterdichtungsrahmens aufweist mit einem Formteilkörper, welcher im wesentlichen U-förmig ausgebildet ist, und mit je einem Kunststoffprofil an der Innenseite der beiden U-Schenkelabschnitte des Formteilkörpers.

26. Kunststoff-Formteil nach Anspruch 24,
dadurch gekennzeichnet,
daß es leistenartig ausgebildet ist mit wenigstens einem am Träger (824a) oder einem weiteren Teil (824b) über ein Kunststoffprofil (810) nach einem der Ansprüche 1 bis 19, 24, und 25 anliegenden Leistenrand (803).

27. Kunststoff-Formteil nach Anspruch 26,
dadurch gekennzeichnet,
daß es als Stoßleiste oder Zierleiste oder Fugenüberbrückungsleiste ausgebildet ist.

## Claims

1. Plastics profile, which can be mounted on a support part, in particular a motor-car door or a motor-car body to bear against the support part, in particular against a lacquered vehicle part and/or against a further part, which is rigid or movable relative to the support part, in particular a window pane, comprising an elongated profile part (310; 410; 510; 610; 810) of hard or elastomeric material as well as a sliding overlay provided on the profile part and bearing against the respective part (824a, 824b), characterised in that the sliding overlay is a fleece (360; 460; 560; 660; 860) extending in the longitudinal direction of the profile part.

2. Plastics profile according to Claim 1, characterised in that the fleece (360; 460; 560; 660; 860) consists of a thermoplastic material and that the profile part (310; 410; 510, 610; 810) consists of a thermoplastic material possibly with elastomeric properties.

3. Plastics profile according to Claim 1 or 2, characterised in that the fleece (360; 460; 560; 660; 860) is made from polypropylene fibres and the profile part (310; 410; 510; 610; 810) is made from a polypropylene polymer.

4. Plastics profile according to one of Claims 1 to 3, characterised in that the fleece (360; 460; 560; 660; 860) is made from acrylic fibres and the profile part (310; 410; 510; 610; 810) is made from a polyvinylchloride polymer or from an acrylonitrile-butadiene-styrene polymer.

5. Plastics profile according to one of Claims 1 to 4, characterised in that the fleece (360; 460; 560; 660; 860) is applied to the profile part (310; 410; 510; 610; 810) during the extrusion process.

6. Plastics profile according to one of Claims 1 to 5, characterised in that the fibres of the fleece (360; 460; 560; 660; 860) consist of a harder material than the profile part (310; 410; 510; 610; 810).

7. Plastics profile according to one of Claims 1 to 6, characterised in that the thickness of the fleece (360; 460; 560; 660; 860) lies in the range from 0.2 mm to 0.8 mm, preferably in the range from 0.3 mm to 0.6 mm, at the best at 0.5 mm.

8. Plastics profile according to one of Claims 1 to 7, characterised in that the fleece (460; 660) comprises recesses (464; 664) extending in the longitudinal direction of the profile part (410; 610), which recesses preferably extend along corresponding recesses (464; 664) of the profile part (410; 660).

9. Plastics profile according to Claim 8, characterised in that the recesses (464; 664) of the fleece (460; 660) and possibly also the recesses (462; 662) of the profile part (410; 610) are produced by means of a heated profile mill cutter.

10. Plastics profile according to one of the preceding Claims, characterised in that at least one hollow chamber (252; 552; 652) extending in the longitudinal direction of the profile part (210; 510; 610) is provided in the profile part (210; 510; 610) in the section (212; 512; 612) provided to bear against the window pane.

11. Plastics profile according to Claim 10, characterised in that the wall (219; 519; 619) of the hollow chamber (262; 552; 652) facing the window pane, is curved outwards.

12. Plastics profile according to one of the preceding Claims, characterised in that at least one stiffening member (254) extending in the longitudinal direction of the profile part (210) is provided in the profile part (210).

13. Plastics profile according to Claim 12, characterised in that the stiffening member (254) is curved in its transverse direction in the direction of the part.

14. Plastics profile according to Claim 12 or 13, characterised in that the stiffening member (254) is located in the region of the end (214) provided for the attachment of the profile part (210).

15. Plastics profile according to one of the preceding Claims, characterised in that provided on the profile part (10; 10') is a retaining member (14, 11'), by which the profile part can be fitted on the part provided for the attachment of the profile part.

16. Plastics profile according to Claim 15, characterised in that the retaining member comprises a substantially U-shaped clip member (11'), extending in the longitudinal direction of the profile part (10'), with side webs (13', 15') and a connecting web (7') connecting the side webs (13', 15'), at least one bearing web (17') provided for bearing against the respective part being provided on the inner surface of at least one of the side webs (13', 15').

17. Plastics profile according to Claim 16, characterised in that located in the region of the free end of at least one of the side webs (13', 15') is a locking lug (19') for cooperation with a locking projection (21') provided on the respective part.

18. Plastics profile according to one of Claims 15 to 17, characterised in that the retaining member (11') consists of harder material than the profile part (10').

19. Plastics profile according to one of Claims 15 to 18, characterised in that the retaining member (11') is co-extruded with the profile part.

20. Use of the plastics profile according to one of the preceding Claims for guiding a window pane arranged to move in a motor-car door on at least one of the two side edges of the window pane.

21. Use of the plastics profile according to one of Claims 1 to 9 for sealing a window pane arranged to move in a motor-car door, at the window pane outlet slot of the motor-car door.

22. Use of at least one plastics profile according to one of Claims 1 to 19 for producing a shaped plastics part by material-locking integral forming of a shaped part body on at least one plastics profile.

23. Use according to Claim 22, characterised in that at least one plastics profile is introduced into an injection mould and then the shaped part body is injected.

24. Shaped plastics part for fitting on a support part, in particular a motor-car door or motor-car body, consisting of at least one plastics profile according to one of Claims 1 to 19 and a shaped part body integrally formed by material locking on at least one plastics profile.

25. Shaped plastics part according to Claim 24, characterised in that the shaped plastics part has the shape of a window gasket frame with a shaped part body, which is constructed to be substantially U-shaped and with respectively one plastics profile on the inside of the two U-leg sections of the shaped part body.

26. Shaped plastics part according to Claim 24, characterised in that it is constructed in the form of a strip with at least one strip edge (803) bearing against the support (824a) or a further part (824b) by way of a plastics profile (810) according to one of Claims 1 to 19, 24 and 25.

27. Shaped plastics part according to Claim 26, characterised in that it is constructed as a buffer protecting strip or trim strip or gap-bridging strip.

## Revendications

1. Profilé en matière plastique, qui peut être monté sur un élément porteur, en particulier d'une portière de voiture ou d'une carrosserie de voiture, en vue de l'application contre l'élément porteur, en particulier contre un élément de véhicule peint et/ou contre un autre élément, qui est fixe ou mobile par rapport à l'élément porteur, en particulier une vitre, comprenant une partie profilée (310 ; 410 ; 510 ; 610 ; 810) allongée en matériau dur ou élastomère ainsi qu'un support de glissement prévu sur la partie profilée et s'appliquant contre l'élément respectif (824a, 824b),
caractérisé
en ce que le support de glissement est un non-tissé (360 ; 460 ; 560 ; 660 ; 860) s'étendant dans la direction longitudinale de la partie profilée.

2. Profilé en matière plastique selon la revendication 1,
caractérisé
en ce que le non-tissé (360 ; 460 ; 560 ; 660 ; 860) est réalisé dans une matière thermoplastique et en ce que la partie profilée (310 ; 410 ; 510 ; 610 ; 810) est réalisée dans une matière thermoplastique éventuellement avec des propriétés élastomères.

3. Profilé en matière plastique selon la revendication 1 ou 2,
caractérisé
en ce que le non-tissé (360 ; 460 ; 560 ; 660 ; 860) est fait de fibres de polypropylène et la partie profilée (310 ; 410 ; 510 ; 610 ; 810) est faite d'un polymère de polypropylène.

4. Profilé en matière plastique selon l'une des revendications 1 à 3,
caractérisé
en ce que le non-tissé (360 ; 460 ; 560 ; 660 ; 860) est fait de fibres acryliques et la partie profilée (310 ; 410 ; 510 ; 610 ; 810) est faite d'un polymère de chlorure de polyvinyle ou d'un polymère d'acrylnitryle-butadiène-styrène.

5. Profilé en matière plastique selon l'une des revendications 1 à 4,
caractérisé
en ce que le non-tissé (360 ; 460 ; 560 ; 660 ; 860) est appliqué lors de l'opération d'extrusion sur la partie profilée (310 ; 410 ; 510 ; 610 ; 810).

6. Profilé en matière plastique selon l'une des revendications 1 à 5,
caractérisé
en ce que les fibres du non-tissé (360 ; 460 ; 560 ; 660 ; 860) sont faites d'un matériau plus dur que la partie profilée (310 ; 410 ; 510 ; 610 ; 810).

7. Profilé en matière plastique selon l'une des revendications 1 à 6,
caractérisé
en ce que l'épaisseur du non-tissé (360 ; 460 ; 560 ; 660 ; 860) est comprise entre 0,2 mm et 0,8 mm, de préférence entre 0,3 mm et 0,6 mm, au mieux est égale à 0,5 mm.

8. Profilé en matière plastique selon l'une des revendications 1 à 7,
caractérisé
en ce que le non-tissé (460 ; 660) présente des creux (464 ; 664), s'étendant dans la direction longitudinale de la partie profilée (410 ; 610), qui s'étendent de préférence le long de creux (464 ; 664) correspondants de la partie profilée (410 ; 610).

9. Profilé en matière plastique selon la revendication 8,
caractérisé
en ce que les creux (464 ; 664) du non-tissé (460 ; 660) et éventuellement aussi les creux (462 ; 662) de la partie profilée (410 ; 610) sont réalisés au moyen d'un cylindre profilé chauffé.

10. Profilé en matière plastique selon l'une des revendications précédentes,
caractérisé
en ce qu'au moins une chambre creuse (252 ; 552 ; 652), s'étendant dans la direction longitudinale de la partie profilée (210 ; 510 ; 610), est prévue dans la partie profilée (210 ; 510 ; 610), dans la portion (212 ; 512 ; 612), prévue pour s'appliquer contre la vitre de fenêtre.

11. Profilé en matière plastique selon la revendication 10,
caractérisé
en ce que la paroi (219 ; 519 ; 619) de la chambre creuse (262 ; 552 ; 652), tournée vers la vitre de fenêtre, est bombée vers l'extérieur.

12. Profilé en matière plastique selon l'une des revendications précédentes,
caractérisé
en ce qu'au moins un élément raidisseur (254), s'étendant dans la direction longitudinale de la partie profilée (210), est prévu dans la partie profilée (210).

13. Profilé en matière plastique selon la revendication 12,
caractérisé
en ce que l'élément raidisseur (254) est cintré dans sa direction transversale, en direction de l'élément.

14. Profilé en matière plastique selon la revendication 12 ou 13,
caractérisé
en ce que l'élément raidisseur (254) est placé dans la zone de l'extrémité (214) prévue pour la fixation de la partie profilée (210).

15. Profilé en matière plastique selon l'une des revendications précédentes,
caractérisé
en ce que sur la partie profilée (10 ; 10'), est prévu un élément de maintien (14, 11') avec lequel la partie profilée peut être appliquée sur l'élément prévu pour la fixation de la partie profilée.

16. Profilé en matière plastique selon la revendication 15,
caractérisé
en ce que l'élément de maintien comprend un élément à agrafe (11') sensiblement en U, s'étendant dans la direction longitudinale de la partie profilée (10'), avec des barrettes latérales (13', 15') et une barrette de liaison (7'), reliant les barrettes latérales (13', 15'), au moins une barrette d'application (17'), prévue pour venir s'appliquer contre l'élément respectif, étant prévue sur la surface intérieure d'au moins l'une des barrettes latérales (13', 15').

17. Profilé en matière plastique selon la revendication 16,
caractérisé
en ce que dans la zone de l'extrémité libre d'au moins l'une des barrettes latérales (13', 15') est placé un ergot d'encliquetage (19') destiné à coopérer avec une saillie d'encliquetage (21'), prévue sur l'élément respectif.

18. Profilé en matière plastique selon l'une des revendications 15 à 17,
caractérisé
en ce que l'élément de maintien (11') est réalisé dans un matériau plus dur que la partie profilée (10').

19. Profilé en matière plastique selon l'une des revendications 15 à 18,
caractérisé
en ce que l'élément de maintien (11') est co-extrudé avec la partie profilée.

20. Utilisation du profilé en matière plastique selon l'une des revendications précédentes pour guider une vitre de fenêtre, placée mobile dans une portière de voiture, sur au moins l'un des deux bords latéraux de la vitre de fenêtre.

21. Utilisation du profilé en matière plastique selon l'une des revendications 1 à 9, pour rendre étanche une vitre de fenêtre, placée mobile dans une portière de voiture, sur la fente de sortie de la vitre de fenêtre de la portière de voiture.

22. Utilisation d'au moins un profilé en matière plastique selon l'une des revendications 1 à 19 pour réaliser une pièce moulée en matière plastique par moulage d'un corps de pièce moulée, par adhérence de matière, sur le profilé en matière plastique au moins unique.

23. Utilisation selon la revendication 22,
caractérisée
en ce que le profilé en matière plastique au moins unique est introduit dans un moule pour injection et le corps de pièce moulée est ensuite injecté.

24. Pièce moulée en matière plastique destinée à être montée sur un élément porteur, en particulier une portière de voiture ou une carrosserie de voiture, constituée d'au moins un profilé en matière plastique selon l'une des revendications 1 à 19, et d'un corps de pièce moulée, moulé par adhérence de matière sur le profil en matière plastique au moins unique.

25. Pièce moulée en matière plastique selon la revendication 24,
caractérisée
en ce que la pièce moulée en matière plastique présente la forme d'un cadre d'étanchéité de fenêtre avec un corps de pièce moulée, qui a sensiblement la forme d'un U, et avec un profilé en matière plastique sur le côté intérieur de chacune des deux portions de branche du U du corps de pièce moulée.

26. Pièce moulée en matière plastique selon la revendication 24,
caractérisée
en ce qu'il est du type d'une baguette avec au moins un bord de baguette (803) s'appliquant contre l'élément porteur (824a) ou un autre élément (824b), par un profilé en matière plastique (810) selon l'une des revendications 1 à 19, 24 et 25.

27. Pièce moulée en matière plastique selon la revendication 26,
caractérisée
en ce qu'elle est conformée en baguette pare-chocs ou en baguette d'enjoliveur ou en baguette de recouvrement de joint.
